(19) Europäisches Patentamt

European Patent Office

Office européen des brevets

(11) **EP 1 635 348 A2**

(12) **EUROPEAN PATENT APPLICATION**

(43) Date of publication:
**15.03.2006 Bulletin 2006/11**

(51) Int Cl.:
*G11B 20/10* (2006.01)

(21) Application number: **05108382.2**

(22) Date of filing: **13.09.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **14.09.2004 KR 2004073367**

(71) Applicant: **SAMSUNG ELECTRONICS CO., LTD.**
**Suwon-si,**
**Gyeonggi-do (KR)**

(72) Inventor: **Ko, Byeong-seob**
**Yeongtong-gu**
**Suwon-si**
**Gyeonggi-do (KR)**

(74) Representative: **Derry, Paul Stefan et al**
**Venner Shipley LLP**
**20 Little Britain**
**London EC1A 7DH (GB)**

(54) **Embedding sound field control factors**

(57)　A method of embedding sound field control factors (SFC factors) into a sound source. The method includes coding sound field factors and sound field information to obtain sound field control factors for the sound source in a binary data type, and the sound field factors represent an acoustic characteristic of the sound source and the sound field information represents an environment under which the sound source is recorded, and watermarking the sound field control factors into the sound source without compressing the sound source. In this method, the SFC factors that represent characteristics of the sound source are embedded into the sound source itself using a digital watermarking technology. Therefore, the SFC factors need not be manually set by a user. In addition, the SFC factors can be reliably transmitted, irrespective of header corruption caused by format conversion and transmission of a compressed sound source.

**FIG. 3**

## Description

A first aspect of the present invention relates to a method of storing sound field information. A second aspect of the invention relates to a method of processing a sound field.

Conventionally, transmitting sound field information for sound field processing requires a user to directly designate the sound field information. Additionally, the sound field information is typically inserted into a header of a packet having a compressed sound source. The sound field information may also be extracted from a sound source itself.

The user designates the sound field information through an input of an audio device with a sound field processor. This conventional method has the drawback that the user is required to designate the sound field information according to characteristics of the sound source. In an attempt to overcome this drawback, a method of matching information about a medium and audio tracks stored thereon with already-input sound field information has been disclosed.

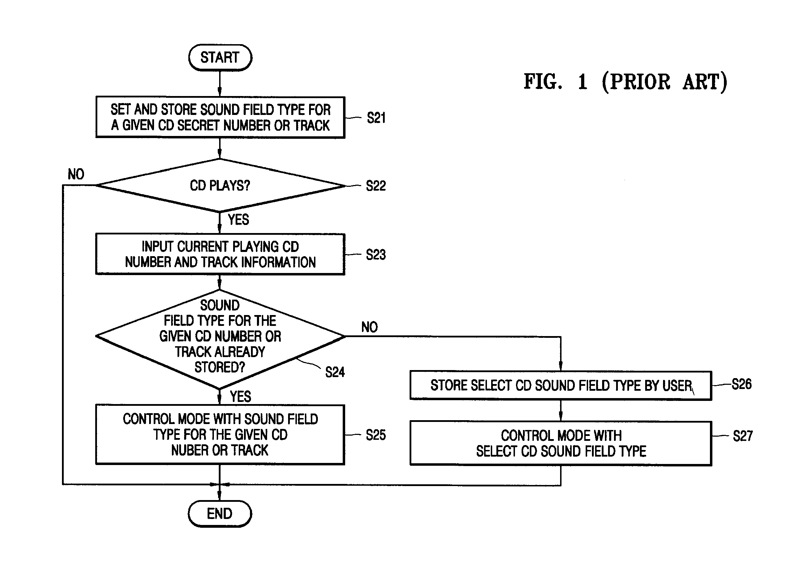

Figure 1 is a flow chart illustrating a conventional method of controlling a sound field. The method illustrated in Figure 1 is disclosed in Korean Patent No. 1998-03133.

The method of controlling the sound field includes a step S21 of setting and storing sound field information on a CD number or track, a step S22 of determining whether the CD is playing, a step S23 of inputting the number of the CD currently playing and track information, a step S24 of determining whether the sound field information has already been stored, a step S25 of controlling the sound field based on the sound field information on the given CD and track when the sound field information on the given CD and track has already been stored, a step S26 of storing the sound field information selected by a user when sound field information on the given CD and track has not been stored, and a step S27 of controlling the sound field based on sound field information selected by the user.

According to the conventional method of controlling the sound field illustrated in Figure 1, which is adapted for a CD, the sound field is controlled using the sound field information that is stored when the CD is initially played. Alternatively, the sound field information can be stored in advance. In this case, the sound field can be controlled using the stored sound field information when a given CD or track is played.

However, the method of controlling the sound field illustrated in Figure 1 requires the user to set the sound field information at least once. In addition, even though characteristics of the sound field can vary in parts of the track, the sound field information can only be set for an average of the sound field characteristics throughout the entire track. Thus, this method can be useful for media having a segmented sound source recorded thereon, (e.g., files, tracks of music, and music videos). However, this method is not useful for media having a continuous sound source, such as a soap opera or a movie.

Further, when the sound field information is inserted into the header of an audio packet having a compression sound source (e.g., an MPEG compression sound source) the sound field information may be corrupted any time the header is corrupted by a transformation such as format conversion and/or transmission. In addition, when the sound field information is extracted from the sound source, there are problems in that accuracy is not guaranteed, real time processing may not be achieved, and the characteristics of the sound field are significantly different for most types of media. Therefore, this method is difficult to implement.

The embodiment can provide a method of embedding sound field control (SFC) factors representing characteristics of a sound source and sound field information representing a scene of a program, a genre of the program, and a sound field mode etc., into an uncompressed sound source.

The embodiment can also provide a method of processing a sound field according to the method of embedding the SFC factors.

The first aspect of the invention is characterised by obtaining sound field control factors by coding sound field factors and sound field information, the sound field factors representing acoustic characteristics of the sound source; and including the sound field control factors in the sound source.

The SFC factors, which refer to sound field factors and sound field information, may be embedded into the uncompressed sound source using watermarking.

The SFC factors that represent characteristics of the sound source may be embedded into the sound source using a digital watermarking technology. Therefore, the user need not manually set the SFC factors one by one. In addition, the SFC factors can be reliably transmitted, irrespective of header corruption caused by format conversion of a compressed sound source and transmission.

The second aspect of the invention is characterised by receiving a sound source having sound field control factors; decoding the sound field control factors from the sound source; and performing sound field processing on the sound source based on the decoded sound field control factors.

Transitional processing, such as fade-in and fade-out processing, can be performed based on SFC factors in a present frame and other SFC factors in a next frame. Therefore, sound field processing can be performed with presence.

An embodiment of the present invention will now be described with reference to the accompanying drawings of which:

Figure 1 is a flow chart illustrating a conventional method of controlling a sound field;
Figure 2 is a block diagram illustrating an embodiment of apparatus for embedding sound field control (SFC) factors according to the present invention;

Figure 3 illustrates a method of embedding the SFC factors according to the present invention;

Figure 4 is a schematic diagram illustrating sound field factors representing acoustic characteristic of a sound source;

Figure 5 is a schematic diagram illustrating operation of a watermark encoder in the method of embedding the SFC factors of Figure 3;

Figure 6 is a schematic diagram illustrating an operation of extracting the SFC factors from the sound source encoded by the watermark encoder of Figure 5;

Figure 7 is a schematic diagram illustrating a watermark decoding operation of the operation of extracting the SFC factors of Figure 6; and

Figure 8 is a flow chart illustrating a method of embedding SFC factors and processing a sound field according to the present invention.

The embodiment provides a method of embedding sound field control factors (hereinafter, referred to as 'SFC factors') that represent sound field characteristics of an uncompressed sound source using watermarking. The watermarked sound source is able to maintain sound properties thereof even though the SFC factors are embedded therein. In addition, the SFC factors, which are decoded by an extracting method that corresponds to the embedding method, are used to process the sound field.

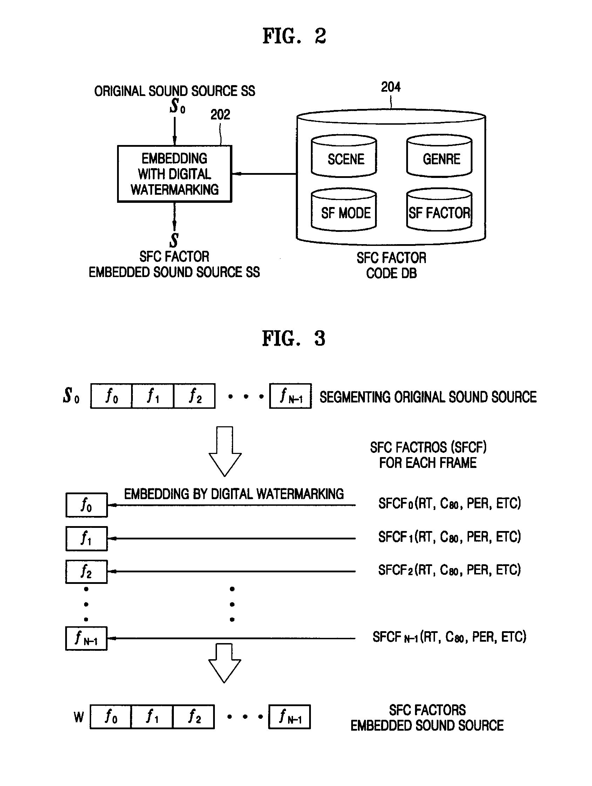

Figure 2 is a block diagram illustrating apparatus for embedding the SFC factors in the sound source. The apparatus includes a watermark encoder 202 and an SFC factor database 204. The watermark encoder 202 performs watermarking of an original sound source $S_o$ with the corresponding SFC factors. The SFC factors refer to coded data embedded with a sound field factor and sound field information. The sound field factor (SF factor) represents the acoustic characteristics of the sound source and includes the reverberation time (RT), the clearness (C), and the pattern of early reflection (PER). Other acoustic characteristics may also be included in the sound field factor. The sound field information includes a program scene, a program genre, and a sound field mode (SF mode) to represent a place where the sound source is recorded, such as woods, plains, caves, or the like.

The SF factor, the SF mode, the program scene, and the program genre are embedded in the sound source $S_o$ and stored in the SFC factor database 204. The SF factor may be directly extracted from the sound source $S_o$ signal. The user may designate the SF mode, the program scene, and the program genre at the time that the sound source $S_o$ is recorded.

Figure 3 illustrates a method of embedding SFC factors.

The sound source $S_o$ is segmented into a plurality of frames. The SFC factors are embedded in the sound source $S_o$ for each frame. The plurality of frames may be segmented based on a position where the characteristics of the sound field of the sound source $S_o$ can be clearly distinguished. For example, the plurality of frames may be obtained based on a position where the SF mode, the program scene, or the program genre changes or where the SF factor can be noticeably distinguished.

The sound source $S_o$ is segmented into the plurality of frames including $f_0$, $f_1$, $f_2$, ..., and $f_{N-1}$. For each of the plurality of frames $f_0$, $f_l$, $f_2$, ..., and $f_{N-1}$, corresponding SFC factors $SFCF_0$, $SFCF_1$, $SFCF_2$, ..., and $SFCF_{N-1}$ are embedded in respective frames of the sound source $S_o$.

The SFC factors SFCF, which comprise coded digital information, include corresponding SF factors, such as RT-reverberation time, $C_{80}$ -clearness, and PER-pattern of early reflection, and other sound field information.

As a result of the encoding of the sound source $S_o$ with the SFC factors SFCF using the watermark encoder 202, the embedded results including $f'_o$, $f'_1$, $f'_2$,..., $f_{N-1}$ are obtained.

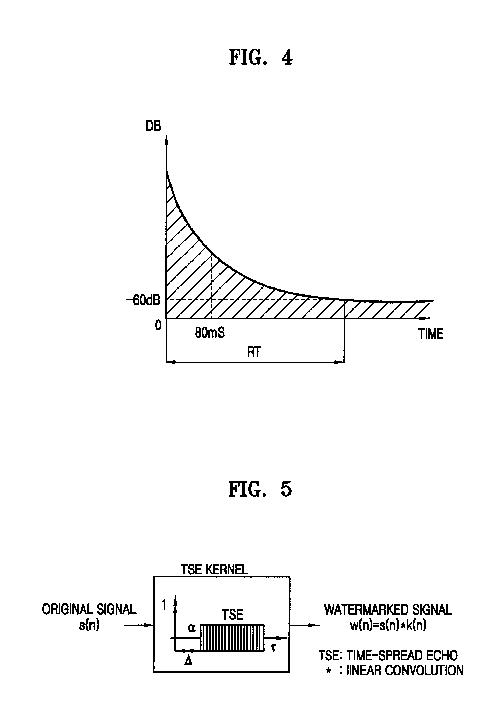

Figure 4 is a schematic diagram illustrating sound field factors representing the acoustic characteristics of the sound source. The reverberation time RT refers to a period over which the strength of a sound falls by 60dB from an initial strength. The clearness represents a ratio of energies including a first energy from a time a sound is generated to 80mS and a second energy from 80mS to a time when the strength of the sound falls by 60dB. The pattern of early reflection PER refers to a reflection pattern after a sound is generated.

Figure 5 is a schematic diagram illustrating operation of a watermark encoder in the method of embedding the SFC factors of Figure 3. A time-spread echo method may be used to add the SFC factors to the sound source.

A kernel of the time-spread echo method can be represented by the following equation.

$$k(n) = \delta(n) + \alpha \cdot p(n - \Delta)$$

where $\delta$ (n) is a dirac-delta function, $p(n)$ is a pseudo-noise (PN) sequence, $a$ is an amplitude, and $\Delta$ is a time delay. The time-spread echo method adds different information (binary data) to the sound source by using different time delays $\Delta$ or different PN sequence $p(n)$.

In addition, p(n) serves as a secret key or an open key with which the embedded information can be extracted. Therefore, the secret key or the open key type can be used according to a system specification. For example, the key type may depend on controlling access of the embedded information.

Referring to Figure 5, the watermarked sound source $W(n)$ is represented by the following equation.

$$W(n) = s(n) * k(n)$$

where * refers to a linear convolution.

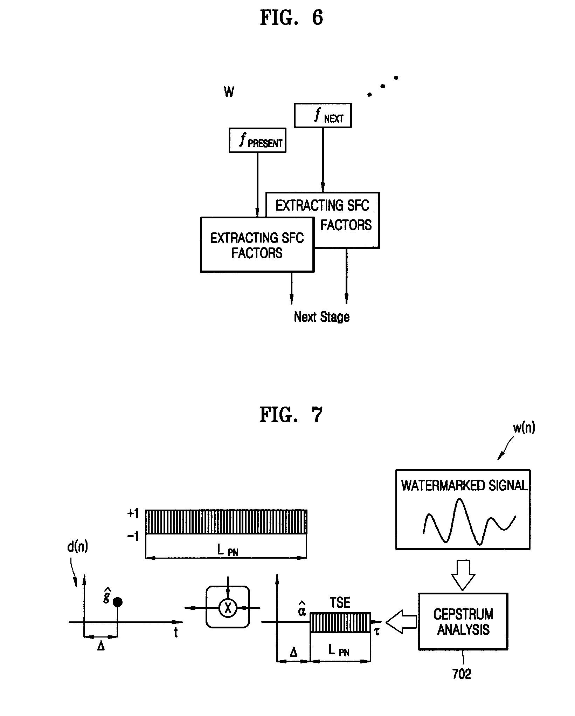

Figure 6 is a schematic diagram illustrating an operation of extracting SFC factors from the sound source encoded by the watermark encoder of Figure 5.

The present frame $f_{present}$ and the next frame $f_{next}$ are decoded through independent decoding processes. Thus, an SFC factor of the present frame $SFCF_{present}$ and an SFC factor of the next frame $SFCF_{next}$ are decoded. The sound field processor references the decoded SFC factors.

In the sound field processing, the SFC factors in the present frame are referenced for the processing of the next frame. For example, when the SF mode of the present frame is a cave mode and the SF mode of the next frame is a plain (i.e., an extensive area of land without trees) mode, fade-out processing is performed to prevent a reverberation sound adapted to the cave SF mode from affecting a reverberation sound adapted to the plain SF mode.

Figure 7 is a schematic diagram illustrating a watermark-decoding operation of the operation of extracting the SFC factors of Figure 6.

In the embodiment, the SFC factors, encoded as illustrated in Figure 5, are decoded using the time-spread echo (TSE) method. Referring to Figure 7, a cepstrum analyser 702 is used to increase the clearness of the watermarked sound source $W(n)$. In the center of Figure 7, a time-amplitude characteristic $\alpha$ of the watermarked sound source $W(n)$ is illustrated.

The decoded sound source d(n) obtained from operation illustrated in Figure 7 is represented by the following equation.

$$d(n) = F^{-1}[\log[F[W(n)]]] \otimes L_{PN}$$

where F[ ] and F$^{-1}$[ ] represent a Fourier transform and an inverse Fourier transform respectively, log[ ] refers to a logarithmic function, $\otimes$ refers to a cross-correlation function, and $L_{PN}$ refers to a PN sequence.

The SFC factors are detected by checking a clear peak position of $\varDelta$ or $\hat{g}$ from d(n). The cross correlation $\otimes$ performs a de-spreading function between the pseudo noise function and the rest of the cepstrum analyzed signal.

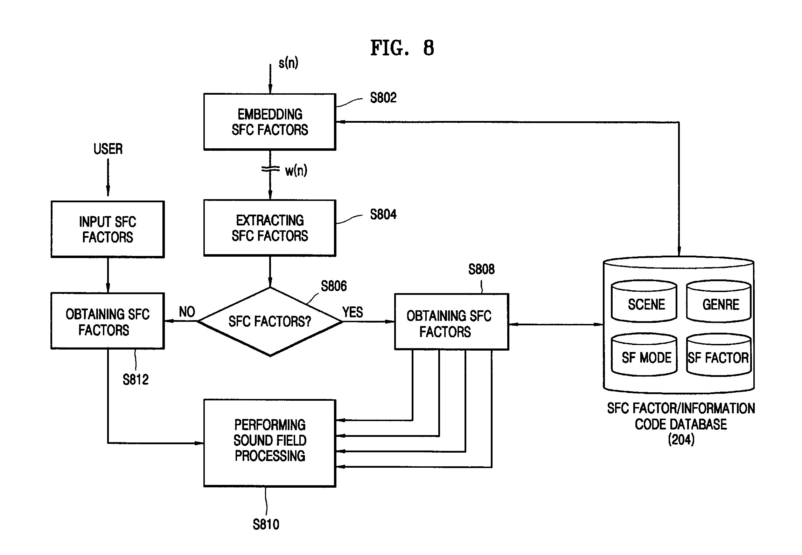

Figure 8 is a flow chart illustrating a method of embedding SFC factors and processing a sound field. First, at step S802, the SFC factors are watermarked and embedded into the sound source. The SFC factors, which are coded data of the sound field factors and the sound field information, are set by referring to the SFC factor database 204 (see Figure 2). The step S802 of watermarking the SFC factors is described above with reference to Figures 4 and 5.

At step S804, the SFC factors are decoded from the watermarked sound source.
The step S804 of decoding the SFC factors from the watermarked sound source is described above with reference to Figures 6 and 7.

At step S806, it is determined whether the SFC factors are extracted. If the SFC factors are extracted, at step S808, the sound field factor and the sound field information that correspond to the embedded SFC factors are obtained by referring to the SFC factor database 204 (see Figure 2).

At step S810, the sound field processing is performed by referring to the sound field factor and the sound field information obtained in step S808. In performing the sound field processing at step S810, sound field processing of the next frame is controlled by referring to the SFC factors of the present frame and the next frame. For example, fade-in and fade-out processing and other transitional processing are performed by referring to the sound field information of the present frame and the next frame. Thus, the sound field processing can be performed with presence.

Further, for the convenience of the user, at step S808, both the sound field factor and the sound field information input by the user, as well as the sound field factor and the sound field information obtained from the extraction, can be referred to.

At step S806, if the SFC factors are not extracted, the process proceeds to step S812. At step S812, the sound field processing is performed by referring to the sound field factor and the sound field information input by the user.

According to the method of embedding SFC factors of this embodiment, the SFC factors representing characteristics of the sound source are embedded into the sound source by using a digital watermarking technology. As a result, the user is not required to designate each of the SFC factors of the sound source.

In addition, according to the method of embedding the SFC factors of this embodiment, the SFC factors are not transmitted in a header of a packet having a compressed sound source. Instead, the SFC factors are embedded and transmitted among sound content in the uncompressed sound source using digital watermark technology. Therefore, even when the header is corrupted by format conversion of the compressed sound source and transmission, the SFC factors can be reliably transmitted.

In addition, according to the method of embedding SFC factors of this embodiment, an uncompressed sound source is segmented into frames. Further, the SFC factors are embedded into each frame of the sound source. Thus, the SFC factors are adapted to the characteristic of the segmented sound source and can be transmitted in real time. In other words, since the sound source may be transmitted in an uncompressed form, the sound source and the SFC factors embedded therein may be processed in real time as the sound source is received by a sound processor. Moreover, the frame segmentation is performed at a position in the sound source where the characteristic of the sound field control is clearly distinguishable. Therefore, the SFC factors can be transmitted more efficiently.

In addition, according to the method of processing the sound field of this embodiemnt, transitional processing, such as fade-in and fade-out processing, can be performed based on sound field control (SFC) factors in the present and the next frames. Therefore, the sound field processing can be performed with presence.

As described above, according to the method of embedding SFC factors of this embodiment, the SFC factors representing characteristics of the sound source can be embedded into the sound source itself without degradation in the sound quality, using digital watermarking technology. In addition, at the time of reproducing the sound source, the SFC factors are extracted and used so that the sound field processing can be reliably performed and the characteristics of sound source can be maintained.

Although an embodiment of the present invention has been shown and described, it will be appreciated by those skilled in the art that changes may be made in this embodiment without departing from the principles of the general inventive concept, the scope of which is defined in the appended claims.

## Claims

1. A method of storing sound field information, the method being **characterised by**:

   obtaining sound field control factors by coding sound field factors and sound field information, the sound field factors representing acoustic characteristics of the sound source; and including the sound field control factors in the sound source.

2. A method as claimed in claim 1, wherein the sound source in uncompressed.

3. A method as claimed in either preceding claim, further comprising:

   segmenting the uncompressed sound source into a plurality of frames,

   wherein including the sound field control factors comprises encoding a sound field control factor in each frame.

4. A method as claimed in claim 3, wherein segmenting the uncompressed sound source into a plurality of frames comprises segmenting the frame at a position where the sound field information or the sound field factors contained in the sound field control factors changes significantly.

5. A method as claimed in any preceding claim, wherein including the sound field control factors comprises watermarking the sound source with the sound field control factors.

6. A method as claimed in any preceding claim, wherein the sound source is continuous.

7. A method of processing a sound field, the method being **characterised by**:

   receiving a sound source having sound field control factors;
   decoding the sound field control factors from the sound source; and
   performing sound field processing on the sound source based on the decoded sound field control factors.

8. A method as claimed in claim 7, wherein each sound field control factor comprises a sound field factor and sound field information, the sound field factor representing acoustic characteristics of the sound source.

9. A method as claimed in claim 8, wherein the sound field control factor is decoded using a sound field control factor database, the sound field control factor database comprising sound field control factors and corresponding sound field factors and sound field information.

10. A method of embedding sound field control factors, the method comprising:

    coding sound field factors and sound field information to obtain the sound field control factors for a sound source in a binary data type, the sound field factors representing an acoustic characteristic of the sound source and the sound field information representing an environment under which the sound source is recorded; and watermarking the sound field control factors into the sound source in an uncompressed state.

11. The method according to claim 10, wherein the watermarking of the sound field control factors into the sound source comprises performing a time-spread echo encoding.

12. The method according to claim 11, wherein the sound field control factors are encoded using at least one of a delay time and a pseudo noise sequence.

13. The method according to claim 10, further comprising:

   segmenting the uncompressed sound source into a plurality of frames, wherein the watermarking of the sound field control factors into the sound source comprises encoding the sound field control factors in a frame unit.

14. The method according to claim 13, wherein the segmenting of the uncompressed sound source into the plurality of frames comprises initiating frame segmenting based on a position where sound field information or sound field factors contained in the sound field control factors are significantly changed.

15. The method according to claim 10, wherein the sound source is continuous.

16. The method according to claim 10, further comprising:

   transmitting the watermarked sound source in the uncompressed state to a sound processor.

17. A method of processing a sound field, the method comprising:

   receiving a sound source having watermarked sound field control factors; decoding the watermarked sound field control factors from the sound source; and performing a sound field processing on the sound source based on the decoded sound field control factors.

18. The method according to claim 17, wherein the sound field control factors each comprises a sound field factor that represents an acoustic characteristic of the sound source and sound field information that represents an environment under which the sound source is recorded, and further comprising:

   providing the sound field control factors decoded based on a sound field control factor database having sound field control factors and corresponding sound field factors and sound field information; and representing an environment under which the sound source is obtained according to the decoded sound field control factors.

19. The method according to claim 18, further comprising:

   receiving the sound field factor and the sound field information from a user.

20. A method of processing sound, the method comprising:

   encoding a sound signal and embedding sound information about at least one sound field of the sound signal in the sound signal in an uncompressed state; and processing the sound signal and the embedded sound information about the at least one sound field of the sound signal.

21. The method according to claim 20, wherein the sound information about the at least one sound field comprises one or more of a sound field factor, a sound field mode, a program genre, and a program scene.

22. The method according to claim 21, wherein the sound field factor is directly extracted from the sound signal and the sound field mode, the program genre, and the program scene are designated by a user at a time when the sound signal is recorded.

23. The method according to claim 21, wherein the sound field factor comprises one or more of a reverberation time, a clearness, and a pattern of early reflection.

24. The method according to claim 21, wherein the sound field mode represents characteristics of a location of where the sound signal is recorded.

25. The method according to claim 20, wherein the encoding of the sound signal and embedding of the sound information about the at least one sound field of the sound signal comprises segmenting the sound signal into a plurality of frames and embedding corresponding sound information in each of the plurality of frames.

26. The method according to claim 25, wherein the plurality of frames are segmented according to a position in the sound signal where the sound information about at least one sound field of the sound signal changes.

27. The method according to claim 20, wherein the sound information is embedded using a watermarking method performed according to a linear convolution between the sound signal $S(n)$ and a kernel function $K(n)$ of a time spread echo method.

28. The method according to claim 27, wherein the kernel function $K(n)$ is defined by:

$$K(n) = \delta(n) + \alpha \bullet p(n-\Delta),$$

where $\delta(n)$ represents a dirac delta function, $\alpha$ represents an amplitude, $p(n)$ represents a pseudo-noise sequence, and $\Delta$ represents a time delay.

29. The method according to claim 28, wherein $p(n)$ is one of an open key and a secret key to extract the embedded sound information about the at least one sound field of the sound signal from the sound signal.

30. The method according to claim 20, wherein the processing of the sound signal and the embedded sound information about the at least one sound field of the sound signal comprises decoding the embedded sound information about the at least one sound field of the sound signal according to the following:

$$d(n) = F^{-1} \left[ \log[F[W(n)]] \right] \otimes L_{PN};$$

where $W(n)$ represents the sound signal having the embedded sound information, $F^{-1}[\,]$ represents an inverse Fourier transform, $F[\,]$ represents a Fourier transform, $\log[\,]$ refers to a logarithmic function, $\otimes$ refers to a cross-correlation function, and $L_{PN}$ refers to a pseudo noise sequence.

31. The method according to claim 20, wherein the encoding of the sound signal and the embedding of the sound information about the at least one sound field of the sound signal comprises:

> mapping the sound information about the at least one sound field to one or more sound field control factors stored in a database; and
> embedding the sound signal with the one or more sound field control factors that correspond with the sound information about the at least one sound field of the sound signal.

32. The method according to claim 20, wherein the processing of the sound signal and the embedded sound information about the at least one sound field of the sound signal comprises decoding the sound signal and the embedded sound information about the at least one sound field of the sound signal by independently decoding a plurality of frames of the sound signal including the corresponding sound information embedded therein.

33. The method according to claim 32, wherein the processing of the sound signal and the embedded sound information about the at least one sound field of the sound signal further comprises processing sound information corresponding with a current frame of the sound signal according to a sound field control factor of the current frame and a sound field control factor of a previous frame.

34. The method according to claim 32, wherein the processing of the sound signal and the embedded sound information about the at least one sound field of the sound signal further comprises performing a transitional processing among neighboring ones of the plurality of frames according to the corresponding sound information embedded therein.

35. The method according to claim 34, wherein the transitional processing comprises one or more of a fade in processing and a fade out processing.

36. The method according to claim 33, wherein the transitional processing accounts for changes in a sound field between the neighboring frames.

37. The method according to claim 20, wherein the embedded sound information about the at least one sound field of the sound signal in the sound signal is digitally watermarked in the sound signal.

38. The method according to claim 20, wherein the processing of the sound signal and the embedded sound information about the at least one sound field of the sound signal occurs in real time as the sound signal is received by a sound processor.

39. A method of transmitting information about sound characteristics of a sound source, the method comprising:

> storing digital information about sound characteristics of the sound source among sound content of the sound source when the sound source is recorded; and
> transmitting the sound source to a sound processor.

40. The method according to claim 39, wherein the digital information about the sound characteristics is watermarked in the sound content of the sound source and the sound content is transmitted in an uncompressed form.

41. The method according to claim 40, wherein the storing of the digital information about sound characteristics of the sound source among the sound content of the sound source comprises dividing the sound content into a plurality of sound frames according to perceived changes in a sound field and storing the digital information about respective sound frames among the plurality of sound frames.

**42.** The method according to claim 41, further comprising:

> receiving the sound source and processing the plurality of sound frames and the stored digital information about the respective sound frames in real time.

**43.** An apparatus to embed sound field control factors in a sound source, comprising:

> a sound field control factor to database to correlate sound field factors and sound field information with the sound field control factors for the sound source in a binary data type, the sound field factors representing an acoustic characteristic of the sound source and the sound field information representing an environment under which the sound source is recorded; and
> a watermark encoder to watermark the sound field control factors into the sound source in an uncompressed state.

**44.** The apparatus according to claim 43, wherein the watermark encoder performs a time-spread echo encoding.

**45.** The apparatus according to claim 44, wherein the sound field control factors are encoded using at least one of a delay time and a pseudo noise sequence.

**46.** The apparatus according to claim 44, wherein the watermark encoder watermarks the sound field control factors into the sound source by segmenting the uncompressed sound source into a plurality of frames and encoding the sound field control factors in a frame unit.

**47.** The apparatus according to claim 46, wherein the watermark encoder segments the uncompressed sound source into the plurality of frames by initiating frame segmenting based on a position where sound field information or sound field factors contained in the sound field control factors are significantly changed.

**48.** An apparatus to process a sound field, comprising:

> a decoder to receive a sound source having watermarked sound field control factors and to decode the watermarked sound field control factors from the sound source; and
> a sound processor to process a sound field of the sound source based on the decoded sound field control factors.

**49.** The apparatus according to claim 48, wherein the sound field control factors each comprises a sound field factor that represents an acoustic characteristic of the sound source and sound field information that represents an environment under which the sound source is obtained; and
the sound processor further provides the sound field control factors decoded based on a sound field control factor database having sound field control factors and corresponding sound field factors and sound field information, and represents an environment under which the sound source is obtained according to the decoded sound field control factors.

**50.** The apparatus according to claim 49, wherein the sound processor receives the sound field factor and the sound field information from a user.

**51.** An apparatus to process sound, comprising:

> an encoder to embed sound information about at least one sound field of a sound signal in the sound signal in an uncompressed state; and
> a sound processor to process the sound signal and the embedded sound information about the at least one sound field of the sound signal.

**52.** The apparatus according to claim 51, wherein the sound information about the at least one sound field comprises one or more of a sound field factor, a sound field mode, a program genre, and a program scene.

**53.** The apparatus according to claim 52, wherein the sound field factor is directly extracted from the sound signal and the sound field mode, the program genre, and the program scene are designated by a user at a time when the sound signal is recorded.

**54.** The apparatus according to claim 52, wherein the sound field factor comprises one or more of a reverberation time, a clearness, and a pattern of early reflection.

**55.** The apparatus according to claim 52, wherein the sound field mode represents characteristics of a location of where the sound signal is recorded.

**56.** The apparatus according to claim 51, wherein the encoder encodes the sound signal and embeds the sound information about at least one sound field of the sound signal by segmenting the sound signal into a plurality of frames and embedding corresponding sound information in each of the plurality of frames.

**57.** The apparatus according to claim 56, wherein the plurality of frames are segmented according to a position in the sound signal where the sound information about at least one sound field of the sound signal changes.

**58.** The apparatus according to claim 51, wherein the sound signal is embedded using a watermarking method performed by the encoder according to a linear convolution between the sound signal S(n) and a kernel function K(n) of a time spread echo method.

**59.** The apparatus according to claim 58, wherein the kernel function K(n) is defined by: K(n) = δ(n) + α•p (n-Δ),
where δ(n) represents a dirac delta function, α represents an amplitude, p(n) represents a pseudo-noise sequence, and Δ represents a time delay.

**60.** The apparatus according to claim 59, wherein p(n) is one of an open key and a secret key to extract the embedded sound information about the at least one sound field of the sound signal from the sound signal.

**61.** The apparatus according to claim 51, wherein the sound processor decodes the sound signal and the embedded sound information about the at least one sound field of the sound signal according to the following:

$$d(n) = F^{-1}\left[\log[F[W(n)]]\right] \otimes L_{PN};$$

where W(n) represents the sound signal having the embedded sound information, $F^{-1}[\,]$ represents an inverse Fourier transform, $F[\,]$ represents a Fourier transform, $\log[\,]$ refers to a logarithmic function, $\otimes$ refers to a cross-correlation function, and $L_{PN}$ refers to a pseudo noise sequence.

**62.** The apparatus according to claim 51, wherein the encoder encodes the sound signal and embeds the sound information about the at least one sound field of the sound signal by mapping the sound information about the at least one sound field to one or more sound field control factors stored in a database, and embedding the sound signal with the one or more sound field control factors that correspond with the sound information about the at least one sound field of the sound signal.

**63.** The apparatus according to claim 51, wherein the sound processor decodes the sound signal and the embedded sound information about the at least one sound field of the sound signal by independently decoding a plurality of frames of the sound signal including the corresponding sound information embedded therein.

**64.** The apparatus according to claim 63, wherein the sound processor processes sound information corresponding with a current frame of the sound signal according to a sound field control factor of the current frame and a sound field control factor of a previous frame.

**65.** The apparatus according to claim 63, wherein the sound processor performs a transitional processing among neighboring ones of the plurality of frames according to the corresponding sound information embedded therein.

**66.** The apparatus according to claim 65, wherein the transitional processing comprises one or more of a fade in processing and a fade out processing.

**67.** The apparatus according to claim 65, wherein the transitional processing accounts for changes in a sound field between the neighboring frames.

**68.** The apparatus according to claim 51, wherein the sound information about the at least one sound field of the sound signal in the sound signal is digitally watermarked in the sound signal.

**69.** The apparatus according to claim 51, wherein the sound processor processes the sound signal and the embedded sound information about the at least one sound field of the sound signal in real time as the sound signal is received by the sound processor.

**70.** An apparatus to transmit information about sound characteristics of a sound source, the apparatus comprising:

an encoder to store digital information about sound characteristics of the sound source among sound content of the sound source when the sound source is recorded and to transmit the sound source to a sound processor.

**71.** The apparatus according to claim 70, wherein the digital information about the sound characteristics is watermarked in the sound content of the sound source and the sound content is transmitted in an uncompressed form.

**72.** The apparatus according to claim 71, wherein the encoder stores the digital information about sound characteristics of the sound source among the sound content of the sound source by dividing the sound content into a plurality of sound frames according to perceived changes in a sound field and storing the digital information about respective sound frames among the plurality of sound frames.

**73.** The apparatus according to claim 72, further comprising:

a sound processor to receiving the sound source and to process the plurality of sound frames and the stored digital information about the respective sound frames in real time.

FIG. 1 (PRIOR ART)

START

SET AND STORE SOUND FIELD TYPE FOR
A GIVEN CD SECRET NUMBER OR TRACK —— S21

CD PLAYS? —— S22
NO
YES

INPUT CURRENT PLAYING CD
NUMBER AND TRACK INFORMATION —— S23

SOUND
FIELD TYPE FOR THE
GIVEN CD NUMBER OR
TRACK ALREADY
STORED?
S24
NO

YES

CONTROL MODE WITH SOUND FIELD
TYPE FOR THE GIVEN CD
NUBER OR TRACK —— S25

STORE SELECT CD SOUND FIELD TYPE BY USER —— S26

CONTROL MODE WITH
SELECT CD SOUND FIELD TYPE —— S27

END

EP 1 635 348 A2

# FIG. 2

ORIGINAL SOUND SOURCE SS

$S_0$

202

204

EMBEDDING
WITH DIGITAL
WATERMARKING

SCENE GENRE

SF MODE SF FACTOR

$S$

SFC FACTOR
EMBEDDED SOUND SOURCE SS

SFC FACTOR
CODE DB

# FIG. 3

$S_0$ | $f_0$ | $f_1$ | $f_2$ | • • • | $f_{N-1}$ | SEGMENTING ORIGINAL SOUND SOURCE

SFC FACTROS (SFCF)
FOR EACH FRAME

EMBEDDING BY DIGITAL WATERMARKING

$f_0$ ← $SFCF_0(RT, C_{80}, PER, ETC)$

$f_1$ ← $SFCF_1(RT, C_{80}, PER, ETC)$

$f_2$ ← $SFCF_2(RT, C_{80}, PER, ETC)$

$f_{N-1}$ ← $SFCF_{N-1}(RT, C_{80}, PER, ETC)$

W | $f_0$ | $f_1$ | $f_2$ | • • • | $f_{N-1}$ | SFC FACTORS
EMBEDDED SOUND SOURCE

**FIG. 4**

**FIG. 5**

# FIG. 6

W

$f_{\text{NEXT}}$

$f_{\text{PRESENT}}$

EXTRACTING SFC FACTORS

EXTRACTING SFC FACTORS

Next Stage

# FIG. 7

w(n)

WATERMARKED SIGNAL

+1
−1
$L_{PN}$

$d(n)$

$\hat{g}$

$\Delta$

t

X

$\hat{\alpha}$  TSE

$\Delta$  $L_{PN}$  $\tau$

CEPSTRUM ANALYSIS

702

**FIG. 8**

s(n)

EMBEDDING SFC FACTORS — S802

USER

⸗ w(n)

INPUT SFC FACTORS

EXTRACTING SFC FACTORS — S804

S806

OBTAINING SFC FACTORS ◀ NO ◀ SFC FACTORS? ▶ YES ▶ OBTAINING SFC FACTORS — S808

SCENE    GENRE

SF MODE    SF FACTOR

S812

SFC FACTOR/INFORMATION CODE DATABASE (204)

PERFORMING SOUND FIELD PROCESSING

S810